# EUROPEAN PATENT APPLICATION

(11) **EP 4 432 737 A1**
(43) Date of publication of application: **18.09.2024**
(21) Application number: 21963035.7
(22) Date of filing: 08.11.2021
(51) Int. Cl.: H04W 48/16

(54) **ACCESS MODE SWITCHING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Gunzelmann, Rainer
(86) International application number: PCT/CN2021/129396
(87) International publication number: WO 2023/077526

(57) **Abstract**

Embodiments of the present disclosure provide an access mode switching method and apparatus, a communication device, and a storage medium. The access mode switching method comprises: when access mode switching information is acquired, switching an accessed network between an SNPN and a PLMN.

## Description

### TECHNICAL FIELD

The disclosure relates to, but is not limited to, a field of wireless communication technology, more particularly, to an access mode switching method, an access mode switching apparatus, a communication device, and a storage medium.

### BACKGROUND

Vertical industries (private networks) have become important deployment scenarios for 5G commercialization. For example, concert venues, which can be regarded as a private network or a stand-alone non-public network (SNPN), can provide more professional and higher-quality music/video services through its private network.

A public network or a public land mobile network (PLMN) can utilize a characteristic of wide coverage to provide common services such as data, voice and other services, which allows users to choose an appropriate network as needed to obtain corresponding services.

### SUMMARY

Embodiments of the disclosure provide an access mode switching method, an access mode switching apparatus, a communication device, and a storage medium.

According to a first aspect of embodiments of the disclosure, an access mode switching method, performed by a user equipment (UE), is provided. The method includes:
in response to obtaining access mode switching information, switching an accessed network between a stand-alone non-public network (SNPN) and a public land mobile network (PLMN).

According to a second aspect of embodiments of the disclosure, an information processing switching method, performed by a network element, is provided. The method includes:
sending access mode switching information to a UE, in which the access mode switching information is configured to indicate the UE to switch an accessed network between a SNPN and a PLMN.

According to a third aspect of embodiments of the disclosure, an access mode switching apparatus is provided. The apparatus includes:
a switching module, configured to, in response to obtaining access mode switching information, switch an accessed network between a SNPN and a PLMN.

According to a fourth aspect of embodiments of the disclosure, an information processing apparatus is provided. The apparatus includes:
a sending module, configured to send access mode switching information to a UE, in which the access mode switching information is configured to indicate the UE to switch an accessed network between a SNPN and a PLMN.

According to a fifth aspect of embodiments of the disclosure, a communication device is provided. The communication device includes a processor, a transceiver, a memory and an executable program stored on the memory and executable by the processor. When the executable program is executed by the processor, the method of the first aspect or the method of the second aspect is implemented.

According to a sixth aspect of embodiments of the disclosure, a computer storage medium having an executable program stored thereon is provided. When the executable program is executed by a processor, the method of the first aspect or the method of the second aspect is implemented.

According to the technical solutions provided by embodiments of the disclosure, in the embodiments of the disclosure, the UE obtains the access mode switching information, and the UE automatically switches between the SNPN and the PLMN when the access mode switching information is obtained, rather than being limited to the current accessed mode with which the SNPN or the PLMN is selected to be accessed, reducing a phenomenon of no network signal coverage or poor network signal quality when leaving the corresponding network caused by limiting UE to the current accessed mode with which only the SNPN or the PLMN can be accessed.

It should be understood that the above general description and the following detailed description are exemplary and explanatory only, and do not limit the disclosure.

### BRIEF DESCRIPTION OF THE DRAWINGS

The accompanying drawings, which are incorporated in and constitute a part of the specification, illustrate embodiments consistent with the disclosure and, together with the specification, serve to explain the principles of embodiments of the disclosure.
FIG. 1 is a schematic diagram of a wireless communication system according to an exemplary embodiment.
FIG. 2 is a flowchart of an access mode switching method according to an exemplary embodiment.
FIG. 3 is a flowchart of an access mode switching method according to an exemplary embodiment.
FIG. 4A is a flowchart of an access mode switching method according to an exemplary embodiment.
FIG. 4B is a flowchart of an access mode switching method according to an exemplary embodiment.
FIG. 5 is a block diagram of an access mode switching apparatus according to an exemplary embodiment.
FIG. 6 is a block diagram of an access mode switching apparatus according to an exemplary embodiment.
FIG. 7 is a block diagram of an access mode switching apparatus according to an exemplary embodiment.
FIG. 8 is a block diagram of a user equipment (UE) according to an exemplary embodiment.
FIG. 9 is a block diagram of a communication device according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the embodiments of the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

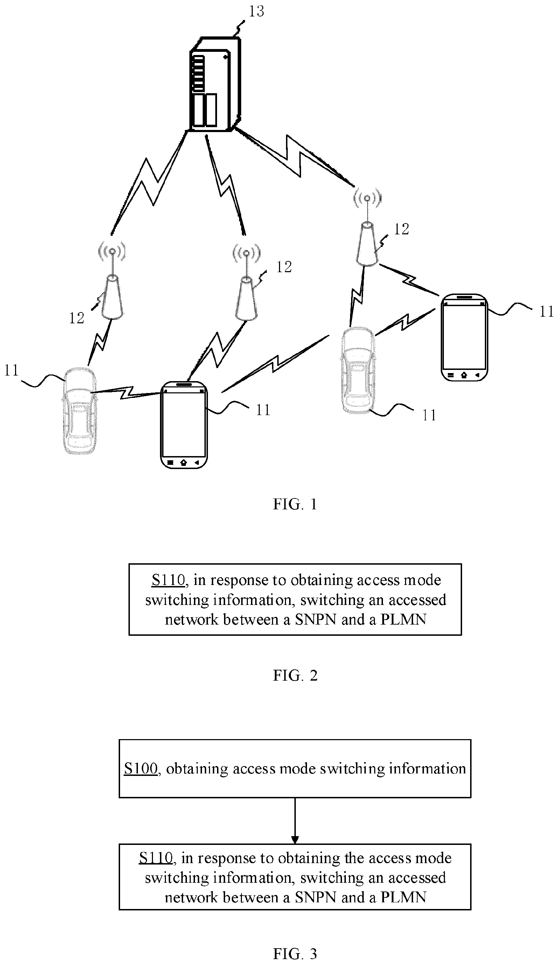

FIG. 1 is a schematic diagram of a wireless communication system provided by an embodiment of the disclosure. As illustrated in FIG. 1, the wireless communication system is a communication system based on cellular mobile communication technology. The wireless communication system may include: a plurality of user equipment (UEs) 11 and a plurality of access devices 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or a "cellular" phone), and a computer with an IoT UE. For example, the UE 11 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 11 may be an unmanned aerial vehicle device. Or, the UE 11 may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The access device 12 may be a network side device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. The access network in the 5G system may be called a New Generation-RAN (NG-RAN) or a machine type communication (MTC) system.

The access device 12 can be an evolved access device (eNB) employed in a 4G system. Or, the access device 12 may be an access device (gNB) with a centralized distributed architecture employed in a 5G system. When the access device 12 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the access device 12 is not limited in the embodiments of the disclosure.

A wireless connection can be established between the access device 12 and the UE 11 via a radio interface. In different implementations, the radio interface is a radio interface based on the 4G standard. Or, the radio interface is a radio interface based on the 5G standard, such as a NR. Or, the radio interface may also be a radio interface based on the standard of a next generation of 5G.

In some embodiments, an End to End (E2E) connection can also be established between the UEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access devices 12 are connected to the network management device 13 respectively. The network management device 13 may be a core network device in the wireless communication system, for example, a Mobility Management Entity (MME) in an Evolved Packet Core (EPC). Or, the network management device may be other core network devices, such as a Serving GateWay (SGW), a Public Data Network GateWay (PGW), a Policy and Charging Rules Function (PCRF), or a Home Subscriber Server (HSS), etc. The implementation form of the network management device 13 is not limited in the embodiments of the disclosure.

As illustrated in FIG. 2, an embodiment of the disclosure provides an access mode switching method, which is performed by a UE. The method includes:
S110, in response to obtaining access mode switching information, an accessed network is switched between a stand-alone non-public network (SNPN) and a public land mobile network (PLMN).

The UE may be any type of UE, for example, a human-carried terminal (e.g., a mobile phone, a tablet computer and a wearable device), a vehicle-mounted terminal, a smart home device, a smart office device, or a smart toy.

The access mode switching information may include at least one of:
a switching instruction that indicates switching of an access mode, in this case, after the UE obtains the switching instruction, an access mode currently used by the UE is directly switched to another access mode; or
a switching instruction and a network identifier of a target network to be switched, in this case, after the UE receives the access mode switching information, it may determine the target network to be accessed after switching according to the network identifier of the target network.

Certainly, the above are merely examples of the access mode switching information, and the specific implementation is not limited to these examples.

In embodiments of the disclosure, when the UE obtains the access mode switching information, it switches the network accessed by the UE between the SNPN and the PLMN. Therefore, the embodiments of the disclosure provide a mechanism that allows the UE to switch freely between the SNPN and the PLMN. In this way, when the UE leaves a coverage of the SNPN, it can switch to access the PLMN by the switching of the access mode. Or, when the UE enters a coverage of the SNPN from that of the PLMN, it can switch to the SNPN that can provide a higher quality of service by the switching of the access mode. Thereby, the communication service quality of the UE is improved, and problems such as poor network signal quality or no network coverage when the UE leaves a specific area can be overcome.

In some embodiments, S110 may include:
in response to the network accessed by the UE being the SNPN when the access mode switching information is obtained, switching the network accessed by the UE from the SNPN to the PLMN;
   or,
in response to the network accessed by the UE being the PLMN when the access mode switching information is obtained, switching the network accessed by the UE from the PLMN to the SNPN.

In an embodiment, if the UE accesses a SNPN currently, the accessed network is switched from the SNPN to a PLMN when the UE obtains the access mode switching information. If the UE accesses a PLMN currently, the UE switches the accessed network from the PLMN to a SNPN when the UE obtains the access mode switching information.

As illustrated in FIG. 3, the method includes the following steps.

S 100, access mode switching information is obtained.

The access mode switching information may be received by the UE from other devices or automatically generated by the UE, and there are many ways for the UE to obtain the access mode switching information, which are not limited to the above examples.

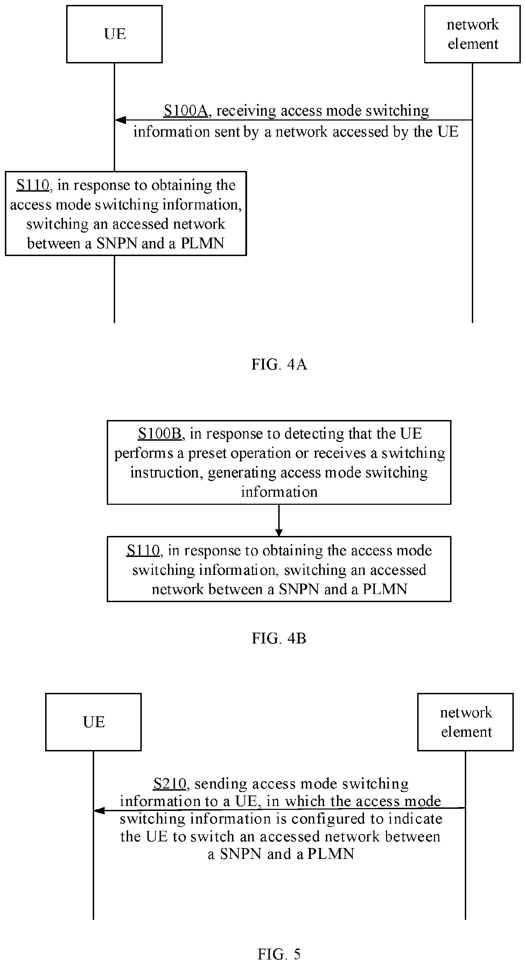

For example, as illustrated in FIG. 4A or FIG. 4B, S100 includes:
S 100A, receiving the access mode switching information sent by the network accessed by the UE;
   and/or,
S 100B, in response to detecting that the UE performs a preset operation or receives a switching instruction, generating the access mode switching information.

The access mode switching information may be obtained from the network side or may be automatically generated by the UE. For example, if the network accessed by the UE is a PLMN, the access mode switching information may be from the PLMN. If the network accessed by the UE is a SNPN, the access mode switching information may be from the SNPN. If the network side expects the UE to switch the accessed network, the network side can instruct the UE to switch the current access mode through the access mode switching information. In this way, the UE may switch the accessed network. For example, one or more network elements of a core network on the network side may send the access mode switching information to the UE. For example, the access mode switching information may be sent to the UE by an access management function (AMF), an access function (AF), or a service server of the core network.

In addition, when the UE itself wants to switch the accessed network or detects a need to switch the accessed network, the UE can generate the access mode switching information, to performing the switching of the accessed network.

In some embodiments, S100A includes: receiving a steering of roaming (SoR) message containing the access mode switching information sent by the network accessed by the UE.

The SoR message is originally used to carry a roaming network list of the UE. By sending the access mode switching information through the SoR message, there is no need to introduce a new message dedicated to transmitting the SoR message between the UE and the network. The access mode switching information is sent in the SoR message that sends the roaming network list. In this way, it is equivalent to performing the operation in a scenario where the UE has a relatively high probability of switching the access network.

In some embodiments, the method further includes:
receiving network information of a target network to be accessed sent by the network accessed by the UE, in which the target network is the PLMN or the SNPN.

The received network information may include a network identifier for indicating that a network accessed by the UE after the switching is a PLMN or a SNPN. In this way, the UE may determine, according to the network information sent by the network side, the network to be accessed after the switching.

In some embodiments, in response to detecting that the UE performs the preset operation or receives the switching instruction, generating the access mode switching information, includes at least one of the following acts:
in response to detecting a switching instruction acting on a user interface (UI) of the UE, generating the access mode switching information;
in response to the network accessed by the UE being the PLMN, generating the access mode switching information in response to detecting an application (APP) supported by the SNPN being started;
in response to the network accessed by the UE being the SNPN, generating the access mode switching information in response to detecting an APP supported by the SNPN being closed; or
in response to the network accessed by the UE being the SNPN, generating the access mode switching information in response to detecting an APP supported by the SNPN being exited.

The UE receives the switching instruction on the UI. The switching instruction may be any instruction input by a user, for example, an instruction that acts on a physical button, a touch instruction that acts on a virtual control displayed on a touch screen, a voice instruction or an air gesture instruction, and the like.

In conclusion, the UI of the UE can detect any switching instruction input by the user. When an instruction is detected, the access mode switching information is generated. The access mode switching information can be generated by an application layer of the UE or by a system layer of the UE.

For example, when the application layer of the UE needs to start, close or exit an APP that uses the SNPN by itself, the access mode switching information may be generated if it is detected that the network accessed by the UE currently is the PLMN.

For another example, when the system layer of the UE monitors that there is a start operation, a close operation, or an exit operation of the APP supported by the SNPN at the application layer of the UE, it may determine whether to generate the access mode switching information based on the network currently accessed by the UE in combination with the SNPN that the APP needs to use.

In conclusion, there are many ways for the UE to generate the access mode switching information, and the specific implementation is not limited to any of the above.

In some embodiments, the method further includes: in response to detecting a change in a network coverage around the UE or detecting a change in a network signal strength around the UE, generating the access mode switching information.

For example, when the UE detects that it enters an area covered by the SNPN from an area without SNPN coverage, the UE may generate the access mode switching information, so that the UE may access the SNPN in a timely manner. For another example, when the UE detects that it enters an area without SNPN coverage from an area covered by the SNPN, the UE may generate the access mode switching information, so that the UE may switch to the PLMN and can at least obtain wireless communication services.

For another example, when the UE detects a significant decrease in a signal quality of the SNPN which makes a service quality provided by the SNPN to be less than a service quality of the PLMN, the UE can generate the access mode switching information to trigger the UE to switch the accessed network from the SNPN to the PLMN.

For another example, when the UE detects that the signal quality of the SNPN is restored to a relatively good state, the UE may generate the access mode switching information to trigger the UE to switch the access network from the PLMN to the SNPN.

In conclusion, there are many ways for the UE to generate the access mode switching information by itself, and the specific implementation is not limited to the above examples.

If there is the start, close or exit operations of the APP supported by the SNPN at the application layer of the UE, the above operations can be used to cause the UE to generate the access mode switching information, thereby controlling the network accessed by the UE to freely switch between the SNPN and the PLMN according to the access mode switching information.

As illustrated in FIG, 5, an embodiment of the disclosure provides an information processing method, which is performed by a network element. The method includes:
S210, access mode switching information is sent to a UE, in which the access mode switching information is configured to indicate the UE to switch an accessed network between a SNPN and a PLMN.

The network element includes, but is not limited to, an AMF, an AF, or user data management (UDM).

By sending the access mode switching information to the UE, the UE may be controlled to perform the switching of the access mode, so that the UE can switch between the SNPN and the PLMN. In this way, the UE is not limited to the current access mode only, i.e., the access mode is not fixedly or solely accessing to the PLMN or the SNPN.

In an embodiment, S210 may include:
sending the access mode switching information to the UE according to contract data of the UE.

The contract data of the UE may come from the UDM.

If a current execution subject of S210 is the AMF, the AMF may send a query request for the contract data to the UDM, receive the contract data a query result returned by the UDM, and send the access mode switching information to the UE.

In some embodiments, S210 includes: sending a SoR message containing the access mode switching information to the UE.

The access mode switching information is sent to the UE through the SoR message, so that no additional dedicated message is needed to send the access mode switching information to the UE, thereby achieving a characteristic of small message signaling overhead.

When a SNPN access mode (AM) is set for the UE, the UE can only select the SNPN and is not allowed to select the PLMN. When a Non-SNPN access mode is set for the UE, the UE can only select the PLMN and is not allowed to select the SNPN.

When the UE receives a request or an identifier for triggering access mode switching, mode switching is performed, to realizing the switching between the PLMN and the SNPN. The request or the identifier for triggering the access mode switching is one kind of the aforementioned access mode switching information.

A network access switching mode based on network control is provided below, which may include followings.

The UE is set to a SNPN access mode and is successfully registered into the SNPN.

The UDM of the SNPN determines to update network selection information of the UE. The network selection information may include an identifier of switching network selection mode (an access mode switch indication) of the UE and corresponding PLMN information to be selected.

The UDM of the SNPN sends the access mode switch indication and the network information of the PLMN to the UE through the SoR message.

When the UE receives the SoR message, it performs security verification and/or integrity verification on the message and updates it to local network selection configuration information after passing the security verification and the integrity verification successfully.

The UE reselects a network according to the SoR message. When it detects the identifier of switching network selection mode (access mode switch indication), the SNPN access mode in which the UE is located is switched to a Non-SNPN access mode.

The UE selects the corresponding PLMN according to the Non-SNPN access mode.

The UE is set to the Non-SNPN access mode and is successfully registered to the PLMN. The UDM of the PLMN determines to update the network selection information of the UE. The network selection information includes an identifier of switching network selection mode (an access mode switch indication) of the UE and corresponding SNPN information to be selected.

The PLMN UDM sends the identifier of switching network selection mode (access mode switch indication) and the SNPN information to the UE side through the SoR message.

When the UE receives the SoR message, it performs security verification and integrity verification, and updates the local network selection configuration information.

The UE performs network reselection according to the SoR message, and when the access mode switching information (e.g., the access mode switch indication) is detected, the Non-SNPN AM mode in which the UE is located is switched to the SNPN AM mode.

The UE selects the corresponding SNPN according to the SNPN access mode.

The UE is set to the SNPN access mode and is successfully registered to the SNPN.

The UE receives a mode switching instruction from an application layer. For example, the user triggers mode change manually, or triggers the mode change by selecting an App supported by the SNPN.

The UE switches from the SNPN access mode to the Non-SNPN access mode according to the mode switching instruction from an upper layer.

When the UE detects a change in the access mode, it reselects a network according to the new Non-SNPN access mode and selects the corresponding PLMN.

The UE is set to the Non-SNPN access mode and is successfully registered into the PLMN.

The UE receives a mode switching instruction from the application layer. For example, the user triggers mode change manually, or triggers the mode change by selecting an App supported by the PLMN.

The UE switches from Non-SNPN access mode to the SNPN access mode according to the mode switching instruction from the upper layer.

When the UE detects a change in the access mode, it reselects a network according to the new SNPN access mode and selects the corresponding SNPN.

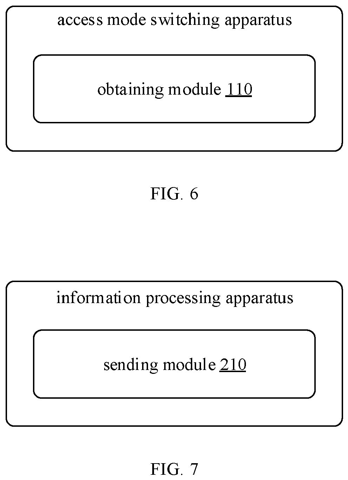

As illustrated in FIG. 6, an embodiment of the disclosure provides an access mode switching apparatus. The apparatus includes:
a switching module 110, configured to, in response to obtaining access mode switching information, switch an accessed network between a SNPN and a PLMN.

The access mode switching apparatus may be included in a UE.

In an embodiment, the switching module 110 may be a program module. After the program module is executed by a processor, it can switch between the SNPN and the PLMN when the access mode switching information is obtained.

In an embodiment, the switching module 110 may be a hardware and software combination module. The hardware and software combination module includes but is not limited to a programmable array. The programmable array includes but is not limited to a field programmable array or a complex programmable array.

In another embodiment, the switching module 110 may be a pure hardware module. The pure hardware module includes but is not limited to a dedicated integrated circuit.

In an embodiment, the switching module 110 is configured to: in response to a network accessed by the UE being the SNPN when the access mode switching information is obtained, switch the network accessed by the UE from the SNPN to the PLMN; or, in response to the network accessed by the UE being the PLMN when the access mode switching information is obtained, switch the network accessed by the UE from the PLMN to the SNPN.

In an embodiment, the apparatus further includes:
a receiving module, configured to receive the access mode switching information sent by the network accessed by the UE;
   or,
a generating module, configured to, in response to detecting that the UE performs a preset operation or receives a switching instruction, generate the access mode switching information.

In an embodiment, the receiving module is configured to receive a SoR message containing the access mode switching information sent by the network accessed by the UE.

In an embodiment, the receiving module is configured to receive network information of a target network to be accessed sent by the network accessed by the UE, in which the target network is the PLMN or the SNPN.

In an embodiment, the generating module is configured to perform at least one of the following acts:
in response to detecting a switching instruction acting on a user interface (UI) of the UE, generating the access mode switching information by the UE;
in response to the network accessed by the UE being the PLMN, generating the access mode switching information by the UE in response to detecting a start operation of an application (APP) supported by the SNPN;
in response to the network accessed by the UE being the SNPN, causing an application layer of the UE to generate the access mode switching information by an application layer of the UE in response to detecting a close operation of an APP supported by the SNPN; or
in response to the network accessed by the UE being the SNPN, generating the access mode switching information by the UE in response to detecting an exit operation of an APP supported by the SNPN.

As illustrated in FIG. 7, an embodiment of the disclosure provides an information processing apparatus. The apparatus includes:
a sending module 210, configured to send access mode switching information to a UE, in which the accessed mode switching information is configured to indicate the UE to switch an access network between a SNPN and a PLMN.

In an embodiment, the sending module 210 may be a program module. After the program module is executed by a processor, it can send the access mode switching information to the UE.

In another embodiment, the sending module 210 may be a hardware and software combination module. The hardware and software combination module includes but is not limited to a programmable array. The programmable array includes but is not limited to a field programmable array or a complex programmable array.

In another embodiment, the switching module 110 may be a pure hardware module. The pure hardware module includes but is not limited to a dedicated integrated circuit.

In an embodiment, the sending module 210 is further configured to send the access mode switching information to the UE according to contract data of the UE.

In an embodiment, the sending module 210 is further configured to send a SoR message containing the access mode switching information to the UE.

Embodiments of the disclosure provide a communication device. The communication device includes:
a memory for storing processor-executable instructions;
a processor connected to the memory.

The processor is configured to implement the terminal control method and/or the information processing method provided by any of the above technical solutions.

The processor may include various types of storage mediums that are non-transitory computer storage mediums capable of continuing to memorize information stored thereon after the communication device is powered down.

The communication device includes: an access device, a UE, or a core network device.

The processor may be connected to the memory via a bus to read an executable program stored on the memory, e.g., at least one of the methods shown in FIG. 2, FIG. 3, FIG. 4A, FIG. 4B, and FIG. 5.

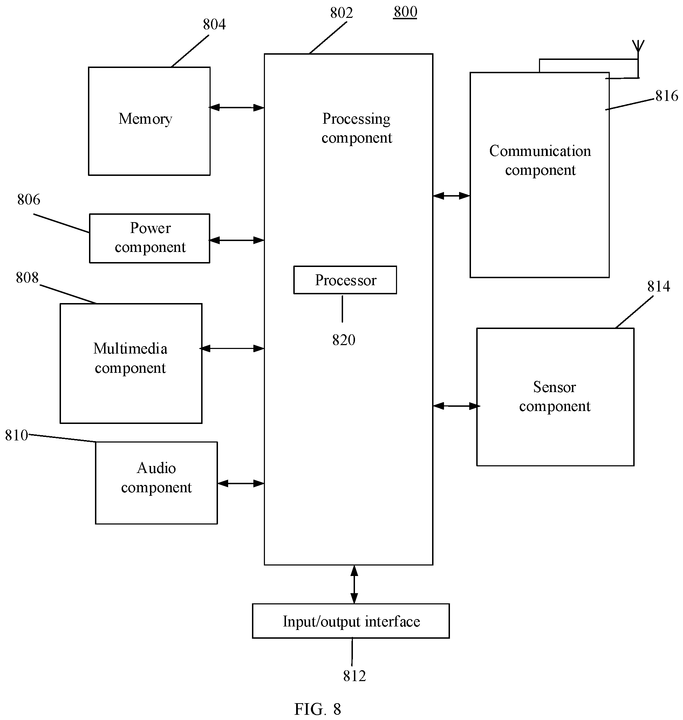

FIG. 8 is a block diagram of a UE 800 according to an exemplary embodiment. For example, the UE 800 may be a mobile phone, a computer, a digital broadcasting UE, a message transceiver device, a game console, a tablet device, a medical device, a fitness device and a personal digital assistant.

As illustrated in FIG. 8, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communication, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or a Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In exemplary embodiments, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

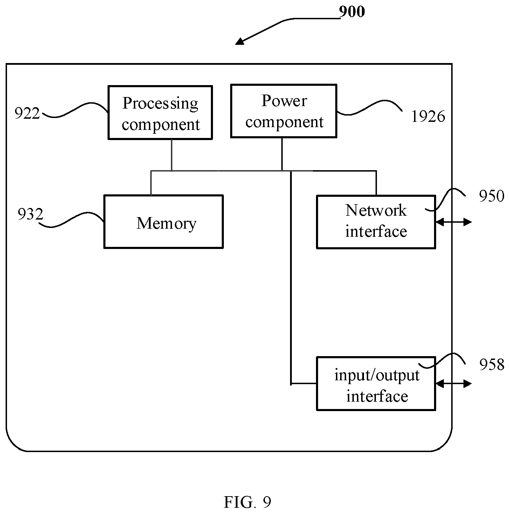

As illustrated in FIG. 9, an embodiment of the disclosure illustrates an architecture of a communication device 900. For example, the communication device 900 may be provided as a network side device. The communication device may be the network element described above.

As illustrated in FIG. 9, the communication device 900 includes a processing component 922 consisting of one or more processors, and memory resources represented by a memory 932 for storing instructions that may be executed by the processing component 922, such as applications. The applications stored in the memory 932 may include one or more modules each corresponding to a set of instructions. In addition, the processing component 922 is configured to execute the instructions to perform any of the methods described above that are performed by the access device, for example, the methods shown in FIG. 2, FIG. 3, FIG. 4A, FIG. 4B and FIG. 5.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An access mode switching method, performed by a user equipment (UE), comprising:
in response to obtaining access mode switching information, switching an accessed network between a stand-alone non-public network (SNPN) and a public land mobile network (PLMN).

2. The method of claim 1, wherein in response to obtaining the access mode switching information, switching the accessed network between the SNPN and the PLMN, comprises:
in response to a network accessed by the UE being the SNPN when the access mode switching information is obtained, switching the network accessed by the UE from the SNPN to the PLMN;
or,
in response to the network accessed by the UE being the PLMN when the access mode switching information is obtained, switching the network accessed by the UE from the PLMN to the SNPN.

3. The method of claim 1 or 2, further comprising:
receiving the access mode switching information sent by the network accessed by the UE;
or,
in response to detecting that the UE performs a preset operation or receives a switching instruction, generating the access mode switching information.

4. The method of claim 3, wherein receiving the access mode switching information sent by the network accessed by the UE comprises:
receiving a steering of roaming (SoR) message containing the access mode switching information sent by the network accessed by the UE.

5. The method of claim 3 or 4, further comprising:
receiving network information of a target network to be accessed sent by the network accessed by the UE, wherein the target network is the PLMN or the SNPN.

6. The method of claim 3, wherein in response to detecting that the UE performs the preset operation or receives the switching instruction, generating the access mode switching information, comprises at least one of:
in response to detecting a switching instruction acting on a user interface (UI) of the UE, generating the access mode switching information;
in response to the network accessed by the UE being the PLMN, generating the access mode switching information in response to detecting a start operation of an application (APP) supported by the SNPN;
in response to the network accessed by the UE being the SNPN, generating the access mode switching information in response to detecting a close operation of an APP supported by the SNPN; or
in response to the network accessed by the UE being the SNPN, generating the access mode switching information in response to detecting an exit operation of an APP supported by the SNPN.

7. An information processing method, performed by a network element, comprising:
sending access mode switching information to a user equipment (UE), wherein the access mode switching information is configured to indicate the UE to switch an accessed network between a stand-alone non-public network (SNPN) and a public land mobile network (PLMN).

8. The method of claim 7, wherein sending the access mode switching information to the UE comprises:
sending the access mode switching information to the UE according to contract data of the UE.

9. The method of claim 7 or 8, wherein sending the access mode switching information to the UE comprises:
sending a steering of roaming (SoR) message containing the access mode switching information to the UE.

10. An access mode switching apparatus, comprising:
a switching module, configured to, in response to obtaining access mode switching information, switch an accessed network between a stand-alone non-public network (SNPN) and a public land mobile network (PLMN).

11. The apparatus of claim 10, wherein the switching module is configured to: in response to a network accessed by the UE being the SNPN when the access mode switching information is obtained, switch the network accessed by the UE from the SNPN to the PLMN; or, in response to the network accessed by the UE being the PLMN when the access mode switching information is obtained, switch the network accessed by the UE from the PLMN to the SNPN.

12. The apparatus of claim 10 or 11, further comprising:
a receiving module, configured to receive the access mode switching information sent by the network accessed by the UE;
or,
a generating module, configured to, in response to detecting that the UE performs a preset operation or receives a switching instruction, generate the access mode switching information.

13. The apparatus of claim 12, wherein the receiving module is configured to receive a steering of roaming (SoR) message containing the access mode switching information sent by the network accessed by the UE.

14. The apparatus of claim 12 or 13, wherein the receiving module is configured to receive network information of a target network to be accessed sent by the network accessed by the UE, wherein the target network is the PLMN or the SNPN.

15. The apparatus of claim 13, wherein the generating module is configured to perform at least one of:
in response to detecting a switching instruction acting on a user interface (UI) of the UE, generating the access mode switching information by the UE;
in response to the network accessed by the UE being the PLMN, generating the access mode switching information by the UE in response to detecting a start operation of an application (APP) supported by the SNPN;
in response to the network accessed by the UE being the SNPN, generating the access mode switching information by an application layer of the UE in response to detecting a close operation of an APP supported by the SNPN; or
in response to the network accessed by the UE being the SNPN, generating the access mode switching information by the UE in response to detecting an exit operation of an APP supported by the SNPN.

16. An information processing apparatus, comprising:
a sending module, configured to send access mode switching information to a user equipment (UE), wherein the access mode switching information is configured to indicate the UE to switch an accessed network between a stand-alone non-public network (SNPN) and a public land mobile network (PLMN).

17. The apparatus of claim 16, wherein the sending module is further configured to send the access mode switching information to the UE according to contract data of the UE.

18. The apparatus of claim 16 or 17, wherein the sending module is further configured to send a steering of roaming (SoR) message containing the access mode switching information to the UE.

19. A communication device comprising a processor, a transceiver, a memory and an executable program stored on the memory and executable by the processor, wherein when the executable program is executed by the processor, the method of any one of claims 1-6 or the method of any one of claims 7-9 is implemented.

20. A computer storage medium having an executable program stored thereon, wherein when the executable program is executed by a processor, the method of any one of claims 1-6 or the method of any one of claims 7-9 is implemented.
